# NEUE EUROPÄISCHE PATENTSCHRIFT

(11) **EP 0 542 065 B2**
(45) Veröffentlichungstag und Bekanntmachung des Hinweises auf die Entscheidung über den Einspruch: **28.04.2010**
(45) Hinweis auf die Patenterteilung: 07.01.1999
(21) Anmeldenummer: 92118663.1
(22) Anmeldetag: 31.10.1992
(51) Int. Cl.: H04B 1/66

(54) **Verfahren zum Decodieren von Binärsignalen**
Method for decoding binary signals
Procédé de décodage de signaux binaires

(30) Priorität: 15.11.1991 DE 4137609
(43) Veröffentlichungstag der Anmeldung: 19.05.1993
(60) Teilanmeldung: 98107089.9
(73) Patentinhaber: IPCom GmbH & Co. KG, 82049 Pullach (DE)
(72) Erfinder: Müller, Jörg Martin, Dipl.-Ing., W-7052 Schwaikheim (DE)
(74) Vertreter: Gigerich, Jan

(56) Entgegenhaltungen:
- EP-A1- 0 413 505
- EP-A2- 0 392 603
- GB-A- 2 238 933
- US-A- 4 688 224
- B. BRYDEN ET AL.: 'ERROR CORRECTION/MASKING FOR DIGITAL VOICE TRANSMISSON OVER THE LAND MOBILE SATELLITE SYSTEM' IEEE TRANSACTIONS ON COMMUNICATIONS Bd. 37, Nr. 3, März 1989, NEW YORK US, Seiten 309 - 314, XP003012145
- D. CHASE: 'A Class of Algorithms for Decoding Block Codes With Channel Measurement Information' IEEE TRANSACTIONS ON INFORMATION THEORY Bd. IT-18, Nr. 1, Januar 1972, Seiten 170 - 182
- J. HAGENAUER ET AL.: 'A Viterbi Algorithm with Soft-Decision Outputs and its Applications' IEEE GLOBAL TELECOMMUNICATIONS CONFERENCE & EXHIBITION, "COMMUNICATIONS TECHNOLOGY FOR THE 1990S AND BEYOND" Bd. 3, 27 November 1989, DALLAS, USA, Seiten 1680 - 1686
- R.V.COX ET AL.: 'Robust CELP coders for noisy backgrounds and noisy channels' IEEE ACOUSTICS, SPEECH, AND SIGNAL PROCESSING Bd. 2, 1989, Seiten 739 - 742
- N.DAL DEGAN ET AL.: 'Communications by vocoder on a mobile satellite fading channel' IEEE INTERNATIONAL CONFERENCE ON COMMUNICATIONS, CONFERENCE RECORD Bd. 2, 22 Juni 1985, CHICAGO, USA, Seiten 771 - 775

## Beschreibung

Die Erfindung geht aus von einem Verfahren zum Decodieren von über einen Kanal übertragenen Binärsignalen gemäß Oberbegriff des Anspruches 1.

Solche Verfahren sind bekannt, beispielsweise in digitalen Mobilfunksystemen gemäß GSM Recommandation 06.10 oder durch den Aufsatz von Gerson et al "Combined Speech and Channel Coding at 11.2 kBit/s" in Signal Procegging EUSIPCO, 1990 Seiten 1339 bis 1342.

Bei der Übertragung digitalisierter Sprache über gestörte Kanäle, z.B. Mobilfunk- oder Satellitenfunk-Kanäle besteht eine wichtige Aufgabe darin, die durch die empfangsseitige Kanaldecodierung nicht korrigierten Bitfehler durch geeignete Maßnahmen so zu überdecken, daß die Auswirkungen möglichst nicht wahr genommen werden können.

Ein Mobilfunkdecoder enthält deshalb üblicherweise die folgenden Funktionsblöcke.
a) Kanaldecoder zur Fehlerkorrektur, beispielsweise ein Viterbidecoder zur Gewinnung des Informationsbitstroms aus den empfangenen Kanalbitstrom.
b) einen Blockdecoder zur Erkennung von Fehlern bei den wichtigsten Informationsbits. Werden Fehler erkannt, so wird dies einer nachfolgenden Einheit durch ein sogenanntes "Bad-Frame-Flag" mitgeteilt.
c) Abhängig von der genannten "Bad-Frame-Flag"-Information führt eine Fehlerüberdeckungseinheit FÜE bestimmte Maßnahmen durch, so beispielsweise Ersetzen der decodierten aber fehlerhaften Parameter durch die zuletzt decodierten fehlerfreien Parameter.
d) Ein Sprachdecoder erzeugt aus den von der Fehlerüberdeckungseinheit FÜE gelieferten Sprachparametern ein synthetisches Sprachsignal, welches anschließend über einen Digital/Analog-Umsetzer zur Ausgabe kommt.

Bei diesem Verfahren beruht die Steuerung der Fehlerüberdeckung ausschließlich auf den Ergebnissen einer CRC-Blockdecodierung. Auch in der Patentschrift GB 2 238 933 A ist ein solches Verfahren beschrieben, jedoch mit dem Unterschied, daß anstelle eines CRC (cyclic redundancy code) deren drei verwendet werden, so daß entsprechend auch drei Blockdecoder erforderlich sind. Dadurch können Aussagen über Restfehler in bestimmten Bitgruppen gemacht und entsprechende Fehlerüberdeckungsmaßnahmen ergriffen werden. Das bekannte Verfahren benötigt viel Übertragungskapazität, da die Blockcodes mit insgesamt 16 Bits pro Sprachrahmen übertragen werden; das entspricht im dort gewählten Beispiel immerhin 10% der Sprachcodec-Bitrate.

Aus der Patentschrift EP 0 392 603 A2 ist ein Übertragungssystem mit einem Viterbi-Entzerrer bekannt. Dabei wird für eine sogenannte Soft Decision Decodierung eine Zuverlässigkeitsinformation über die zu decodierende Datenfolge ermittelt, das heißt eine Maßzahl, die angibt, mit welcher Wahrscheinlichkeit die zu decodierenden Datenelemente den gesendeten entsprechen.

Aus IEEE Transactions on communications, Band 37, Nr. 3, März 1989 New York, US, Seiten 309 - 314, Bryden et al.: "Error Correction/Masking for Digital Voice Transmission over the Land Mobile Satellite System" ist ein Verfahren zur Fehlerkorrektur und -maskierung für digitalen Sprach-Mobilfunk über Satelliten bekannt. Dabei wird als Fehlerüberwachungscode ein (28, 20) Fire Code verwendet.

Das Prinzip der Fehlerüberdeckung wird erfolgreich eingesetzt und wirkt insbesondere bei kurzzeitigen Einbrüchen der Empfangsfeldstärke (Flading) z.B. hervorgerufen durch Fahrten in einen Tunnel, Fahrten im Schatten von Hochhäusern usw. Dennoch gibt es fehlerhafte Übertragungen, die nicht erkannt werden und deshalb auch nicht überdeckt werden können und eine Auswirkung haben derart, daß die Sprachqualität beim Empfänger durch mehr oder weniger laute Kanlleffekte teilweise erheblich beeinträchtigt ist.

Der Erfindung lag die Aufgabe zugrunde, ein Verfahren der eingangs genannten Art anzugeben, welches ermöglicht, eine Übertragung über gestörte Kanäle dahingehend zu verbessern, daß Bitfehler noch sicherer erkannt werden,. Daß dies mit möglichst wenig Zusatzaufwand verbunden sein sollte, ist selbstverständlich, Ziel soll sein, daß ein solches Übertragungsverfahren eine noch höhere Qualität und einen höheren Komfort, insbesondere bei Mobilfunk, ermöglicht.

Diese Aufgabe wurde gelöst durch die Merkmale des Anspruches 1. Vorteilhafte Ausgestaltungen ergeben sich durch aie Unteransprüche.

Durch die Vorgehensweise gemäß des erfindungsgemäßen Verfahrens ergeben sich die Vorteile einer höheren Qualität und auch eines höheren Komforts bei Übertragungen insbesondere im Mobil- und Satellitenfunk. Dies wird ermöglicht durch relativ wenig Zusatzaufwand.

Durch das erfindungsgemäße Verfahren wird Kanalkapazität ohne Qualitätsverlust eingespart. Die eingesparte Kanalkapazität kann entweder zur Erhöhung der Nutzbitrate oder zur Erhöhung der Bitrate für die Kanalcodierung eingesetzt werden. In beiden Fällen wird eine Qualitätsverbesserung erreicht.

Es folgt nun die Beschreibung anhand der Figuren.

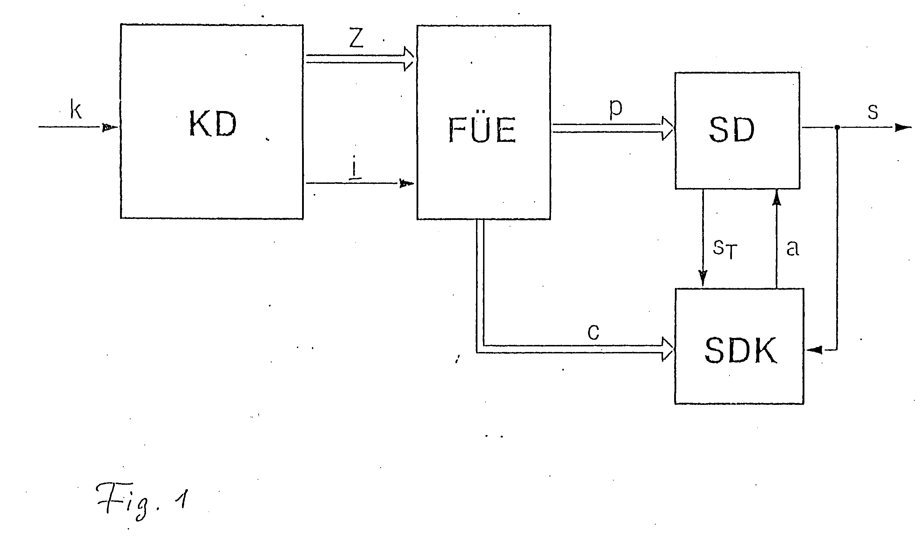

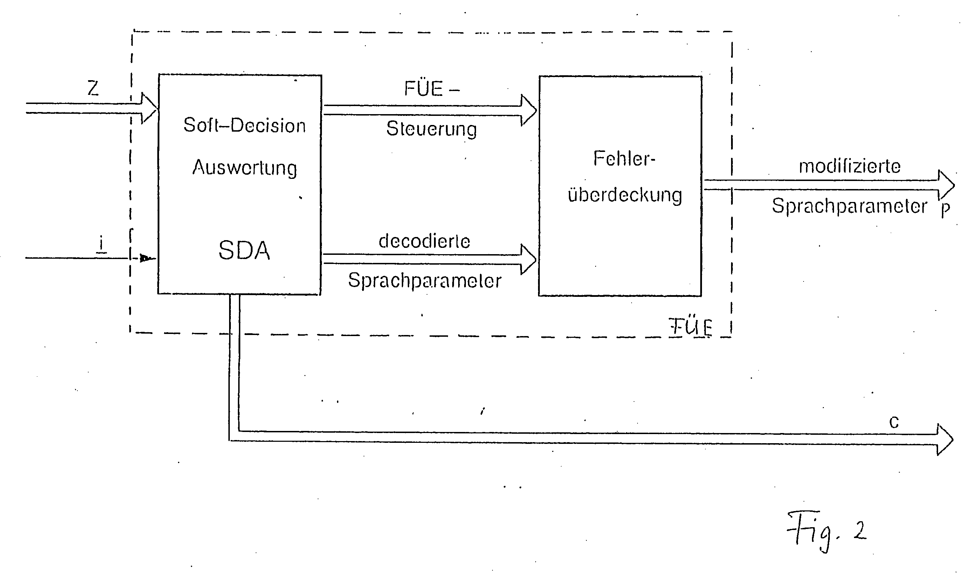

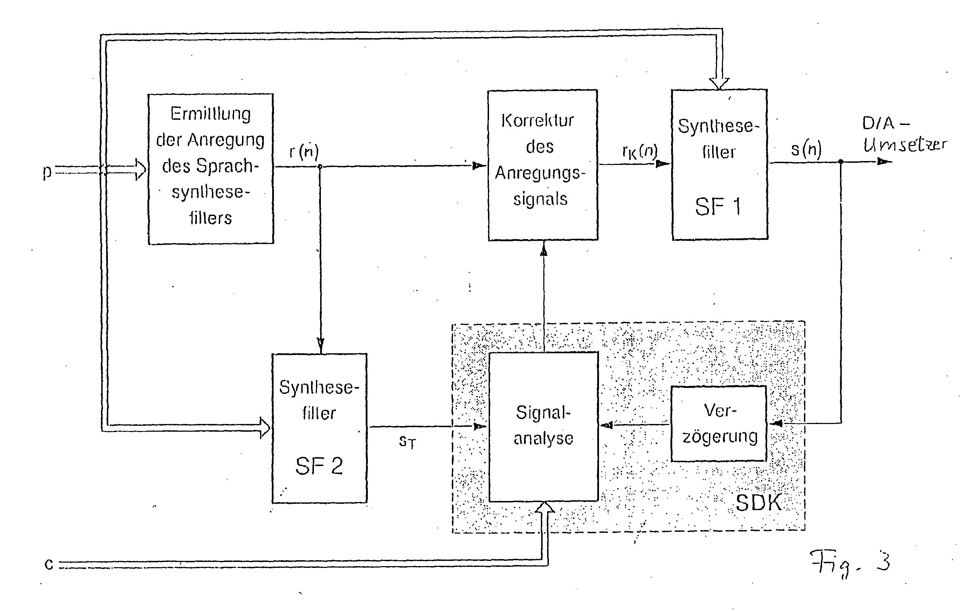

Figur 1 zeigt ein Übersichtsblockschaltbild für einen erfindungsgemäßen Empfangsdecoder, hier als Ausführungsbeispiel, nämlich eines Decoders für ein Mobilfunkempfänger. In Figur 2 ist die Fehlerüberdeckungseinheit etwas detaillierter dargestellt, und in Figur 3 ist schließlich ein erfindungsgemäßer Sprachdecoder gezeichnet, ebenfalls in detaillierter Weise und ebenfalls für den Einsatz beispielsweise im Mobilfunkbereich.

Die Figur 1 zeigt einen Kanaldecoder KD, der beispielsweise nach dem Viterbialgorithmus arbeitet, dessen Eingangsdaten k die empfangenen, demodulierten, entzerrten und deinterleavten Daten sind und dessen Ausgangsdaten i die decodierten (Nutz) Informationsbits und Z die Information für die Zuverlässigkeit eines jeden Informationsbit ist. Die Zuverlässigkeit ist hier ein Maß, welches mit 7 Bit dargestellt wird, wobei der Wert Null als sehr unzuverlässig gilt, d. h. eine Fehlerwahrscheinlichkeit von 0,5 entspricht, und wobei der höchste Wert 127 als sehr zuverlässig (Fehlerwahrscheinlichkeit gegen 0) gilt.

Die beiden Ausgangsdatenströme des Kanaldecoders KD speisen eine nachfolgende Fehlerüberdeckungseinheit FÜE, deren Ausgangsdaten P modifizierte Sprachparameter sind, aus denen der nachfolgende Sprachdecoder SD ein synthetisches Sprachsignal rekonstruiert. Die Fehlerüberdeckungseinheit liefert außerdem Steuerparameter c für eine Sprachdecoderkontroll- und Steuereinheit SDK. Die Steuerparameter c enthalten Informationen über die mittlere Zuverlässigkeit der wichtigsten Sprachparameter und können z.B. mit 4 Bit übermittelt werden. Die SDK untersucht die statistischen Eigenschaften des rekonstruierten Sprachsignals s, vergleicht es mit den statistischen Eigenschaften des aktuellen Testsprachsignals S_{T}, welches vom Sprachsynthesefilter SF2 erzeugt wird, und gibt nach der Analyse Ausgangsdaten a ab, welche unter Berücksichtigung der Parameter c gewonnene Regelgrößen für das Sprachsignal sind.

Figur 2 zeigt die Aufteilung der Fehlerüberdeckungseinheit FÜE in die beiden Blöcke Softdecisionauswertung SDA und die eigentliche Fehlerüberdeckung FÜE. Die Softdecisionauswertung erarbeitet aus der Fehlerwahrscheinlichkeit Z für jedes decodierte Informationsbit i die zur Fehlerüberdeckung erforderlichen Steuersignale und erzeugt aus dem Informationsbitstrom i die einzelnen decodierten Sprachparameter, welche schließlich aufgrund der FÜE-Steuersignalinformation u. U. zu modifizierten Sprachparametern P am Ausgang der Fehlerüberdeckungseinheit FÜE führen.

In Figur 3 schließlich ist ein erfindungsgemäßer Sprachdecoder in Blockschaltung dargestellt. Dieser Sprachdecoder arbeitet ebenfalls mit Fehlerüberdeckung, jedoch nicht auf Sprachparameterebene sondern auf Sprachsignalebene. Die von der vorangegangenen Fehlerüberdeckungseinheit FÜE erzeugten (modifizierten) Sprachparameter P werden einem ersten Block A eingegeben, der für die Ermittlung der Anregung der Sprachsynthesefilter verantwortlich zeichnet, sowie den beiden Synthesefiltern SF1 und SF2. Das Anregungssignal r (n) beaufschlagt beide Synthesefilter. Das am Ausgang des ersten Synthesefilters SF1 erzeugte synthetische Sprachsignal s (n) gelangt in die Sprachdecoderkontrolleinheit SDK und zwar über eine Verzögerungsleitung. Die statistischen Eigenschaften dieses Signals werden mit denjenigen des aktuell mit SF2 synthetisierten Testsprachsignals S_{T} unter Beachtung der Steuerparameter c, welche von der Soft-Decision-Auswertung SDA stammen, verglichen. Das Analyseergebnis wirkt als Steuersignal a korrigierend auf das Anregungssignal r (n), welches als korrigiertes Anregungssignal rₖ (n) dem ersten Synthesefilter SF1 eingegeben wird.

Ein Teil der Signalanalyse kann z.B. auf einen Vergleich des Energieinhaltes der Signale S(n) und S_{T}(n) beruhen, wobei in Abhängigkeit der Steuerparameter c mehr oder weniger große Energiesprünge zugelassen werden.

Durch die erfindungsgemäße Fehlererkennung wird eine relativ genaue Aussage über die Fehlerwahrscheinlichkeit von Bitgruppen, welche die einzelnen Sprachparameter bilden, ermöglicht; dadurch kann die Blockcodierung zugunsten der Übertragung von weiteren Nutzbits und/oder zusätzlichem Fehlerschutz entfallen, wodurch die Sprachqualität weiter erhöht wird.

## Patentansprüche

1. Verfahren zur Decodierung von binären Sprachsignalen, die über einen Kanal mit einem fehlerkorrigierenden Code übertragen werden
- mit einem Kanaldecodierungsschritt, bei dem die über den Kanal empfangenen Signale in Informationsbits umgewandelt werden, die Sprachparameter repräsentieren,
- einem Sprachdecodierungsschritt, bei dem die Sprachparameter in synthetisches Sprachsignale umgewandelt werden, **dadurch gekennzeichnet,**
- **daß** bei dem Kanaldecodierungsschritt zusätzlich eine Information über die Höhe der Zwerlässigkeit der decodierten Informationsbits ermittelt wird, und
- **daß** bei dem Sprachdecodierungsschritt in Abhängigkeit von der Höhe der Zuverlässigkeit und einem Vergleich eines aktuellen nicht korrigierten Sprachsignals mit einem vorhergehenden korrigierten Sprachsignal eine Beeinflussung des Sprachsignals erfolgt.

2. Verfahren nach Anspruch 1, **dadurch gekennzeichnet, daß** für den Spraehdecodierungsschritt ein Sprachdecoder mit einem ersten und einem zweiten Sprachsynthesefilter vorgesehen ist, daß für den Vergleich der Energieinhalt des vorhergehenden Sprachsignals des ersten Sprachsynthesefilters mit dem Energieinhalt des Sprachsignals des zweiten Sprachsynthesefilters verglichen wird, und das in Abhängigkeit von der Höhe der Zuverlässigkeit mehr oder wenig große Sprünge im Energieinhalt zugelassen werden.

3. Verfahren nach einem dervorhergehenden Ansprüche, **dadurch gekennzeichnet, daß** als Kanaldecoder ein Viterbidecoder mit Soft-Decision-Ausgang eingesetzt wird.

4. Verfahren nach einem dervorhergehenden Ansprüche, **gekennzeichnet durch** einen Einsatz bei der Sprachübertragung im Mobilfunk.

5. Verfahren nach einem dervorhergehenden Ansprüche, **dadurch gekennzeichnet, daß** jeweils für die einzelnen übertragenen decodierten Informationsbits oder Informationsbitgruppen Schwellwerte für die Zuverlässigkeit definiert bzw. zugeordnet und bei Überschreitung dieser Schwellwerte die zugeordneten Infomiationsbits oder Informationsbitgruppen als richtig erklärt und sonst, also bei Nichterreichen dieser Werte, als Fehler oder als "unsicher" deklariert werden.

6. Vorrichtung zur Decodierung von binären Sprachsignalen, die über einen Kanal mit einem fehlerkorrigierenden Code übertragen werden
- mit einem Kanaldecoder, der die über den Kanal empfangenen Signale in Informationsbits umwandelt, die Sprachparameter repräsentieren,
- einem Sprachdecoder der die synthetische Sprachparameter in synthetische Sprachsignale umwandelt, **dadurch gekennzeichnet,**
- **daß** der Kanaldecoderzusätzlich eine Information über die Höhe der Zuverlässigkeit der decodierten informationsbits ermittelt, und
- **daß** der Sprachdecoder in Abhängigkeit von der Höhe der Zuverlässigkeit und einem Vergleich eines akuellen nicht korrigierten Sprachsignals mit einem vorhergehenden korrigierten Sprachsignal eine Beeinflussung des Sprachsignals vornimmt.

7. Vorrichtung nach Anspruch 6, **dadurch gekennzeichnet, daß** der Sprachdecoder ein erstes und einem zweites Sprachsynthesefitter aufweist, daß für den Vergleich der Sprachsignale der Energieinhalt des vorhergehenden Sprachsignals des ersten Sprachsynthesefilters mit dem Energieinhalt des Sprachsignals des zweiten Sprachsynthesefilters verglichen wird, und das in Abhängigkeit von der Höhe der Zuverlässigkeit mehr oder wenig große Sprünge im Energieinhalt zugelassen ist.

8. Vorrichtung nach einem der Ansprüche 6 oder 7, **dadurch gekennzeichnet, daß** der Kanaldecoder einen Viterbidecoder mit Soft-Decision-Ausgang aufweist.

## Claims

1. Method for decoding binary speech signals which are transmitted over a channel with an error-correcting code
- with a channel-decoding step, in which the signals received over the channel are converted into information bits which represent speech parameters,
- a speech-decoding step, in which the speech parameters are converted into synthetic speech signals, **characterized in that**
- in the channel-decoding step, information regarding the level of reliability of the decoded information bits is also determined, and
- in the speech-decoding step, a treatment of the speech signal is carried out on the basis of the level of reliability and a comparison between a current uncorrected speech signal and a preceding corrected speech signal.

2. Method according to Claim 1, **characterized in that** a speech decoder with a first and a second speech synthesis filter is provided for the speech-decoding step, **in that**, for the comparison, the energy content of the preceding speech signal of the first speech synthesis filter is compared with the energy content of the speech signal of the second speech synthesis filter, and **in that** jumps of a varying size are permitted in the energy content, depending on the level of reliability.

3. Method according to one of the preceding claims, **characterized in that** a Viterbidecoder with soft decision output is used as the channel decoder.

4. Method according to one of the preceding claims, **characterized by** use in mobile radio speech transmission.

5. Method according to one of the preceding claims, **characterized in that** threshold values for reliability are respectively defined or assigned for the individual transmitted and decoded information bits or information bit groups, and the assigned information bits or information bit groups are declared valid if these threshold values are exceeded, and otherwise, that is to say if these values are not reached, declared as errors or as "unreliable".

6. Device for decoding binary speech signals which are transmitted over a channel with an error-correcting code
- with a channel decoder, which converts the signals received over the channel into information bits which represent speech parameters,
- a speech decoder, which converts the synthetic speech parameters into synthetic speech signals, **characterized in that**,
- the channel decoder also determines information regarding the level of reliability of the decoded information bits, and
- the speech decoder performs a treatment of the speech signal on the basis of the level of reliability and a comparison between a current uncorrected speech signal and a preceding corrected speech signal.

7. Device according to Claim 6, **characterized in that** the speech decoder has a first and a second speech synthesis filter, **in that**, for the comparison, the energy content of the preceding speech signal of the first speech synthesis filter is compared with the energy content of the speech signal of the second speech synthesis filter, and **in that** jumps of a varying size are permitted in the energy content, depending on the level of reliability.

8. Device according to Claim 6 or 7, **characterized in that** the channel decoder has a Viterbidecoder with soft decision output.

## Revendications

1. Procédé de décodage de signaux vocaux, binaires, transmis par un canal, avec un code de correction d'erreurs, comprenant :
- une étape de décodage de canal qui convertit les signaux reçus par le canal en bits d'information représentant des paramètres vocaux, et
- une étape de décodage vocal qui convertit les paramètres vocaux en signaux vocaux de synthèse,
**caractérisé en ce que**
- dans l'étape de décodage de canal on détermine en plus une information relative au niveau de fiabilité des bits d'information, décodés, et
- dans l'étape de décodage vocal, on influence le signal vocal en fonction du niveau de fiabilité et d'une compa raison d'un signal vocal actuel non corriger avec un signal vocal antérieur corriger.

2. Procédé selon la revendication 1,
**caractérisé en ce que**
- l'étape de décodage vocal est effectuée par un décodeur vocal avec un premier et un second filtre vocal de syn thèse,
- pour la comparaison, on compare le contenu d'énergie du signal vocal antérieur du premier filtre de synthèse vo cale à l'énergie contenue dans le signal vocal du second filtre de synthèse vocale et
- en fonction du niveau de fiabilité on autorise des sauts plus ou moins importants pour le contenu de l'énergie.

3. Procédé selon l'une des revendications précédentes,
**caractérisé en ce que**
le décodeur de canal est un décodeur de code Viterbi, avec une sortie de « décision douce ».

4. Procédé selon l'une des revendications précédentes,
**caractérisé par**
une application à la transmission vocale en téléphonie mobile.

5. Procédé selon l'une quelconque des revendications précédentes,
**caractérisé en ce que**
chaque fois pour les différents bits d'informations décodées, transmis ou les groupes de bits d'informations, on définit ou on attribue des seuils de fiabilité et en cas de dépassement de ces seuils, les bits ou groupes de bits d'informations correspondants sont déclarés comme « vrais » et dans le cas contraire, c'est-à-dire lorsqu'on atteint pas ces valeurs, on les déclare en défauts ou comme « non sûrs ».

6. Dispositif de décodage de signaux vocaux binaires transmis par un canal avec un code à correction d'erreurs, comprenant :
- un décodeur de canal qui convertit les signaux reçus par le canal en bits d'informations représentant les paramè tres vocaux,
- un décodeur vocal qui convertit les paramètres vocaux de synthèse en signaux vocaux de synthèse,
**caractérisé en ce que**
- le décodeur de canal détermine en outre une information relative au niveau de fiabilité des bits d'information décodés et
- en fonction du niveau de fiabilité et d'une comparaison entre un signal vocal actuel non corriger et un signal vocal antérieur corriger, le décodeur vocal agit sur le signal vocal.

7. Dispositif selon la revendication 6,
**caractérisé en ce que**
le décodeur vocal comprend un premier et second filtre vocal de synthèse,
et pour la comparaison des signaux vocaux on compare le contenu d'énergie du signal vocal antérieur du premier filtre de synthèse vocale au contenu d'énergie du signal vocal du second filtre de synthèse vocale et selon le niveau de fiabilité on autorise des sauts plus ou moins importants pour le contenu d'énergie.

8. Dispositif selon l'une des revendications 6 ou 7,
**caractérisé en ce que**
le décodeur de canal comprend un décodeur Viterbi avec une sortie de « décision douce ».
